# EUROPEAN PATENT SPECIFICATION

(11) **EP 3 579 400 B1**
(45) Date of publication and mention of the grant of the patent: **14.04.2021**
(21) Application number: 19178830.6
(22) Date of filing: 06.06.2019
(51) Int. Cl.: H02P 9/00, H02H 9/00, H02M 1/36

(54) **SYSTEM AND METHOD FOR MINIMIZING INRUSH OF CURRENT DURING START-UP OF AN ELECTRICAL POWER SYSTEM**
SYSTEM UND VERFAHREN ZUR MINIMIERUNG DES ZUSTROMS WÄHREND DES STARTVORGANGS EINES STROMSYSTEMS
SYSTÈME ET PROCÉDÉ POUR MINIMISER LE COURANT D'APPEL PENDANT LE DÉMARRAGE D'UN SYSTÈME D'ALIMENTATION ÉLECTRIQUE

(30) Priority: 06.06.2018 US 201816001489
(43) Date of publication of application: 11.12.2019
(73) Proprietor: General Electric Company, Schenectady, NY 12345 (US)
(72) Inventor: Holliday, Cornelius Edward, Salem, VA 24153 (US); Smith, David, Salem, VA 24153 (US)
(74) Representative: Zimmermann & Partner Patentanwälte mbB

(56) References cited:
- US-A1- 2013 235 629
- US-A1- 2016 172 963
- US-A1- 2018 069 404
- US-A1- 2018 112 647

## Description

### FIELD

The present disclosure relates generally to wind turbines and, more particularly, to a system and method for minimizing inrush of current during start-up of an electrical power system connected to a power grid.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to a generator for producing electricity.

During operation, wind impacts the rotor blades and the blades transform wind energy into a mechanical rotational torque that drives a low-speed shaft. The low-speed shaft is configured to drive the gearbox that subsequently steps up the low rotational speed of the low-speed shaft to drive a high-speed shaft at an increased rotational speed. The high-speed shaft is generally coupled to the generator so as to rotatably drive a generator rotor. In many wind turbines, the generator may be electrically coupled to a bi-directional power converter that includes a rotor-side converter joined to a line-side converter via a regulated DC link. As such, the generator is configured to convert the rotational mechanical energy to a sinusoidal, three-phase alternating current (AC) electrical energy signal in a generator stator. The rotational energy is converted into electrical energy through electromagnetic fields coupling the rotor and the stator, which is supplied to a power grid via a grid breaker. Thus, the main transformer steps up the voltage amplitude of the electrical power such that the transformed electrical power may be further transmitted to the power grid.

Such wind turbine power systems are generally referred to as a doubly-fed induction generator (DFIG). DFIG operation is typically characterized in that the rotor circuit is supplied with current from a current-regulated power converter. As such, the wind turbine produces variable mechanical torque due to variable wind speeds and the power converter ensures this torque is converted into an electrical output at the same frequency of the grid.

In addition, wind turbines (and solar converters) also often have capacitance built into the AC interface. For example, such capacitance may be part of a filter to ensure power quality of the power system. During startup, a disconnect switch is closed in order to connect the system to the grid. When the switch is closed, however, there can be an inrush of current when the grid voltage is applied to the capacitance. The inrush of current can cause voltage drops and overshoots at the connection point and throughout the power distribution of the wind turbine, thereby causing stress to auxiliaries/accessories in the wind turbine.

Thus, the present disclosure is directed to a system and method for minimizing inrush of current during start-up of an electrical power system connected to a power grid to address the aforementioned issues.

Document US 2018/069404 A1 relates to a pre-charge unit for pre-charging a main converter of a power plant comprising the features of the preambles of the independent claims.

### BRIEF DESCRIPTION

These problems are at least partly solved by the present invention. Aspects, details, embodiments and advantages of the invention will be apparent from the claims, the following description and/or the drawings, or may be obvious from the description, or may be learned through practice of the invention.
In one aspect, the present disclosure is directed to a method for a method for minimizing inrush of current during start-up of an alternating current (AC) electrical power system connected to a power grid. The method includes determining a grid voltage of the power grid. The method also includes charging an AC capacitance of a grid filter of the electrical power system from an initial capacitance value to a predetermined percentage of the grid voltage. Further, the method includes connecting the electrical power system to the power grid when the AC capacitance in the grid filter reaches the predetermined percentage of the grid voltage. Moreover, the method includes initiating start-up of the electrical power system.

In one embodiment, the method may include charging the AC capacitance in the grid filter of the electrical power system with at least one additional electrical component coupled to the grid filter. In such embodiments, the additional electrical component(s) may include one or more resistors, a contactor, and/or any other suitable electrical components or combinations thereof that are capable of limiting electrical transients. In addition, the method may include bypassing the at least one additional electrical component after connecting the electrical power system to the power grid but before initiating start-up the electrical power system.

In another embodiment, the method may include charging the AC capacitance in the grid filter of the electrical power system via a power converter of the electrical power system operating in a first operating mode. As such, the power converter is configured to produce a voltage in sync with the grid voltage prior to connecting the electrical power system to the power grid.

In further embodiments, the method may include charging a DC link of the power converter to a predetermined power level prior to charging the AC capacitance in the grid filter of the electrical power system via the power converter. Alternatively, the method may include supplying a DC link of the power converter with additional power prior to charging the capacitance in the grid filter of the electrical power system via the power converter. In several embodiments, the method may also include transitioning from the first operating mode of the power converter to a second operating mode after charging the AC capacitance of the grid filter of the electrical power system. In such embodiments, the first operating mode may correspond to an AC charging mode, whereas the second operating mode may correspond to a standard operating mode.

In additional embodiments, the predetermined percentage of the grid voltage may be up to about 100% of the grid voltage. Therefore, in certain embodiments, the predetermined percentage of the grid voltage may be less than 100% of the grid voltage.

In particular embodiments, the electrical power system may be a wind turbine power system or a solar power system.

In another aspect, the present disclosure is directed to a wind turbine power system. The wind turbine power system includes a generator having a rotor and a stator and a power converter having a line-side converter coupled to a rotor-side converter via a DC link. The rotor-side converter is coupled to the rotor. The wind turbine power system also includes a grid filter coupled between the line-side converter and a power grid. Further, the wind turbine power system includes a controller configured to perform one or more operations, including but not limited to charging the grid filter from an initial voltage value to a predetermined percentage of a grid voltage of the power grid, connecting the wind turbine power system to the power grid when the initial voltage value in the grid filter reaches the predetermined percentage of the grid voltage, and initiating start-up of the wind turbine power system after the initial voltage value in the grid filter reaches the predetermined percentage of the grid voltage. It should be understood that the method system may further include any of the additional steps and/or features as described herein. It should be understood that the system may further include any of the additional features as described herein.

In yet another aspect, the present disclosure is directed to an alternating current (AC) electrical power system. The electrical power system includes a generator having a rotor and a stator and a power converter having a line-side converter coupled to a rotor-side converter via a DC link. The rotor-side converter is coupled to the rotor. The electrical power system also includes a grid filter coupled between the line-side converter and a power grid. Further, the electrical power system includes a controller configured to control the electrical power system, including but not limited to determining a grid voltage of the power grid, charging an AC capacitance of the grid filter from an initial capacitance value to a predetermined percentage of the grid voltage, connecting the electrical power system to the power grid when the AC capacitance in the grid filter reaches the predetermined percentage of the grid voltage, and initiating start-up of the electrical power system.

It should be understood that the electrical power system may further include any of the additional features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a portion of one embodiment of a wind turbine according to the present disclosure;
FIG. 2 illustrates a schematic view of one embodiment of an electrical power system suitable for use with the wind turbine shown in FIG. 1;
FIG. 3 illustrates a block diagram of one embodiment of a controller suitable for use with the wind turbine shown in FIG. 1;
FIG. 4 illustrates a schematic diagram of one embodiment of a power converter of a wind turbine according to the present disclosure;
FIG. 5 illustrates a partial, schematic diagram of one embodiment of an electrical power system according to the present disclosure, particularly illustrating the electrical components between the line side converter and the transformer; and
FIG. 6 illustrates a flow diagram of one embodiment of a method for minimizing inrush of current during start-up of an AC electrical power system connected to a power grid according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present disclosure relates to pre-charging the capacitor of the grid filter in an electrical power system to the AC grid voltage to reduce electrical transients and/or inrush upon start-up of the system. Such pre-charging can be accomplished with resistors, a contactor, and/or via the power converter which produces a voltage in sync with the grid voltage prior to closing the connection to the power grid. In certain embodiments, the voltage on the capacitor can be less than 100% of the grid voltage to reduce the inrush of current. In addition, the voltage on the capacitor does not have to be perfectly aligned with the grid voltage to reduce the inrush. In further embodiments, for the power converter to effectively charge the capacitance, the DC link must be charged and/or supplied with enough power to apply an AC voltage for a sufficient time period to connect to the power grid.

Accordingly, the present disclosure provides numerous advantages over prior art systems and methods. For example, the systems and methods of the present disclosure is capable of reducing the stress on fuses, power supplies, UPSs, motors, and/or other components of the power system. Reduced stress can thereby increase component life. The systems and methods of the present disclosure can avoid catastrophic destruction due to voltage spikes occurring as a result of the inrush current.

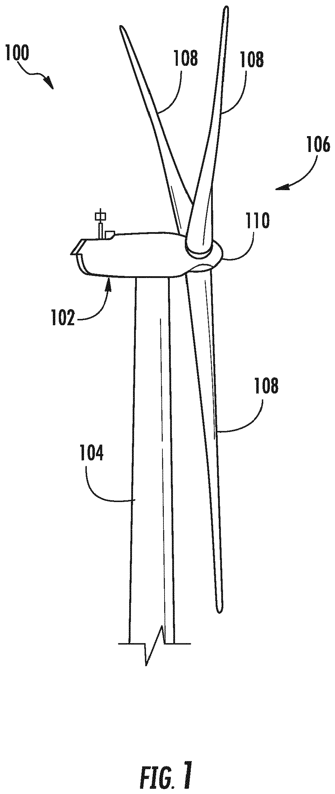

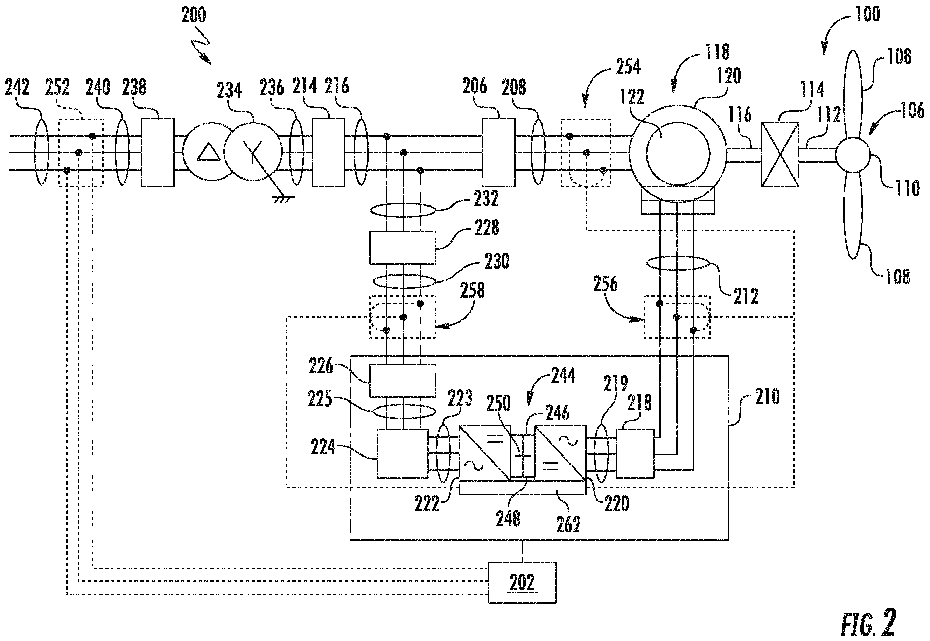

Referring now to the drawings, FIG. 1 illustrates a perspective view of a portion of one embodiment of a wind turbine 100 according to the present disclosure that is configured to implement the method as described herein. The wind turbine 100 includes a nacelle 102 that typically houses a generator 118 (FIG. 2). The nacelle 102 is mounted on a tower 104 having any suitable height that facilitates operation of wind turbine 100 as described herein. The wind turbine 100 also includes a rotor 106 that includes three blades 108 attached to a rotating hub 110. Alternatively, the wind turbine 100 may include any number of blades 108 that facilitates operation of the wind turbine 100 as described herein.

Referring now to FIG. 2, a schematic view of one embodiment of an electrical power system 200 that may be used with the wind turbine 100 is illustrated. During operation, wind impacts the blades 108 and the blades 108 transform wind energy into a mechanical rotational torque that rotatably drives a low-speed shaft 112 via the hub 110. The low-speed shaft 112 is configured to drive a gearbox 114 that subsequently steps up the low rotational speed of the low-speed shaft 112 to drive a high-speed shaft 116 at an increased rotational speed. The high-speed shaft 116 is generally rotatably coupled to a generator 118 so as to rotatably drive a generator rotor 122 having field winding (not shown). More specifically, in one embodiment, the generator 118 may be a wound rotor, three-phase, doubly-fed induction (asynchronous) generator (DFIG) that includes a generator stator 120 magnetically coupled to a generator rotor 122. It should be understood that the electrical power system may also encompass any other suitable power generation system in addition to DFIG systems, including but not limited to permanent magnet generator (PMG) systems and/or any system connected to a power grid that includes a disconnect device, AC capacitance, and a power converter.

As such, a rotating magnetic field may be induced by the generator rotor 122 and a voltage may be induced within a generator stator 120 that is magnetically coupled to the generator rotor 122. In such embodiments, the generator 118 is configured to convert the rotational mechanical energy to a sinusoidal, three-phase alternating current (AC) electrical energy signal in the generator stator 120. The associated electrical power can be transmitted to a main transformer 234 via a stator bus 208, a stator synchronizing switch 206, a system bus 216, a main transformer circuit breaker 214, and a generator-side bus 236. The main transformer 234 steps up the voltage amplitude of the electrical power such that the transformed electrical power may be further transmitted to a power grid 243 via a grid circuit breaker 238, a breaker-side bus 240, and a grid bus 242.

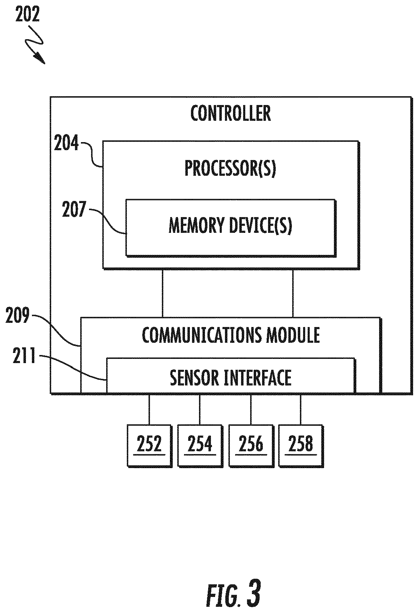

In addition, the electrical power system 200 may include a wind turbine controller 202 configured to control any of the components of the wind turbine 100 and/or implement the method steps as described herein. For example, as shown particularly in FIG. 3, the controller 202 may include one or more processor(s) 204 and associated memory device(s) 207 configured to perform a variety of computer-implemented functions (e.g., performing the methods, steps, calculations and the like and storing relevant data as disclosed herein). Additionally, the controller 202 may also include a communications module 209 to facilitate communications between the controller 202 and the various components of the wind turbine 100, e.g. any of the components of FIG. 2. Further, the communications module 209 may include a sensor interface 211 (e.g., one or more analog-to-digital converters) to permit signals transmitted from one or more sensors to be converted into signals that can be understood and processed by the processors 204. It should be appreciated that the sensors (e.g. sensors 252, 254, 256, 258) may be communicatively coupled to the communications module 209 using any suitable means. For example, as shown in FIG. 3, the sensors 252, 254, 256, 258 may be coupled to the sensor interface 211 via a wired connection. However, in other embodiments, the sensors 252, 254, 256, 258 may be coupled to the sensor interface 211 via a wireless connection, such as by using any suitable wireless communications protocol known in the art. As such, the processor 204 may be configured to receive one or more signals from the sensors.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 204 is also configured to compute advanced control algorithms and communicate to a variety of Ethernet or serial-based protocols (Modbus, OPC, CAN, etc.). Additionally, the memory device(s) 207 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 207 may generally be configured to store suitable computer-readable instructions that, when implemented by the processor(s) 204, configure the controller 202 to perform the various functions as described herein.

Referring back to FIG. 2, the generator stator 120 may be electrically coupled to a stator synchronizing switch 206 via a stator bus 208. In one embodiment, the generator rotor 122 may be electrically coupled to a bi-directional power conversion assembly 210 or power converter via a rotor bus 212. Alternatively, the generator rotor 122 may be electrically coupled to the rotor bus 212 via any other device that facilitates operation of electrical power system 200 as described herein. In a further embodiment, the stator synchronizing switch 206 may be electrically coupled to a main transformer circuit breaker 214 via a system bus 216.

The power conversion assembly 210 may include a rotor filter 218 that is electrically coupled to the generator rotor 122 via the rotor bus 212. In addition, the rotor filter 218 may include a rotor-side reactor. A rotor filter bus 219 electrically couples the rotor filter 218 to a rotor-side power converter 220. Further, the rotor-side power converter 220 may be electrically coupled to a line-side power converter 222 via a single direct current (DC) link 244. Alternatively, the rotor-side power converter 220 and the line-side power converter 222 may be electrically coupled via individual and separate DC links. In addition, as shown, the DC link 244 may include a positive rail 246, a negative rail 248, and at least one capacitor 250 coupled therebetween.

In addition, a line-side power converter bus 223 may electrically couple the line-side power converter 222 to a line filter 224. Also, a line bus 225 may electrically couple the line filter 224 to a line contactor 226. In addition, the line filter 224 may include a line-side reactor. Moreover, the line contactor 226 may be electrically coupled to a conversion circuit breaker 228 via a conversion circuit breaker bus 230. In addition, the conversion circuit breaker 228 may be electrically coupled to the main transformer circuit breaker 214 via system bus 216 and a connection bus 232. The main transformer circuit breaker 214 may be electrically coupled to an electric power main transformer 234 via a generator-side bus 236. The main transformer 234 may be electrically coupled to a grid circuit breaker 238 via a breaker-side bus 240. The grid circuit breaker 238 may be connected to the electric power transmission and distribution grid via a grid bus 242.

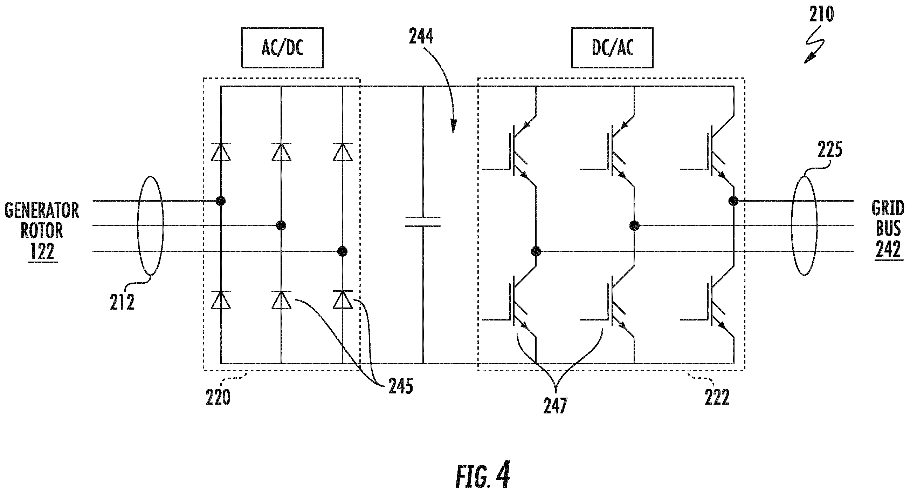

Referring particularly to FIGS. 2 and 4, alternating current (AC) power generated at the generator stator 120 by rotation of the rotor 106 is provided via a dual path to the grid bus 242. The dual paths are defined by the stator bus 208 and the rotor bus 212. On the rotor bus side 212, sinusoidal multi-phase (e.g. three-phase) AC power is provided to the power conversion assembly 210. The rotor-side power converter 220 converts the AC power provided from the rotor bus 212 into DC power and provides the DC power to the DC link 244. Switching elements 245 (e.g. diodes) used in bridge circuits of the rotor side power converter 220 can be modulated to convert the AC power provided from the rotor bus 212 into DC power suitable for the DC link 244.

The line side converter 222 converts the DC power on the DC link 244 into AC output power suitable for the electrical grid bus 242. In particular, switching elements 247 (e.g. IGBTs) used in bridge circuits of the line side power converter 222 can be modulated to convert the DC power on the DC link 244 into AC power on the line side bus 225. The AC power from the power conversion assembly 210 can be combined with the power from the stator 120 to provide multi-phase power (e.g. three-phase power) having a frequency maintained substantially at the frequency of the electrical grid bus 242 (e.g. 50 Hz/60 Hz).

It should be understood that the rotor-side power converter 220 and the line-side power converter 222 may have any configuration using any switching devices that facilitate operation of electrical power system 200 as described herein. For example, FIG. 4 illustrates a simplified schematic diagram of one embodiment of a variable frequency drive (VFD) that maintains a constant electrical frequency output on the grid side of the generator 118. As shown, the VFD configuration includes a six-switch voltage-sourced rectifier on the rotor side converter 220, a DC link capacitor 249 to minimize DC voltage variation, and a six-switch voltage-sourced inverter utilizing pulse width modulation on the grid side. Rotor-side switching elements 245 are often diodes or silicon controlled rectifiers (SCR), while the grid side-switching elements 247 are often insulated gate bipolar transistors (IGBTs). As such, the magnitude and electrical frequency of the current supplied to the generator rotor 122 through the VFD may be varied to account for changes in the rotor shaft speed and to maintain a constant output on the generator stator winding.

Further, the power conversion assembly 210 may be coupled in electronic data communication with the turbine controller 202 and/or a separate or integral converter controller 262 to control the operation of the rotor-side power converter 220 and the line-side power converter 222. For example, during operation, the controller 202 may be configured to receive one or more voltage and/or electric current measurement signals from the first set of voltage and electric current sensors 252. Thus, the controller 202 may be configured to monitor and control at least some of the operational variables associated with the wind turbine 100 via the sensors 252. In the illustrated embodiment, each of the sensors 252 may be electrically coupled to each one of the three phases of the power grid bus 242. Alternatively, the sensors 252 may be electrically coupled to any portion of electrical power system 200 that facilitates operation of electrical power system 200 as described herein. In addition to the sensors described above, the sensors may also include a second set of voltage and electric current sensors 254, a third set of voltage and electric current sensors 256, a fourth set of voltage and electric current sensors 258 (all shown in FIG. 2), and/or any other suitable sensors.

It should also be understood that any number or type of voltage and/or electric current sensors 252, 254, 256, 258 may be employed within the wind turbine 100 and at any location. For example, the sensors may be current transformers, shunt sensors, rogowski coils, Hall Effect current sensors, Micro Inertial Measurement Units (MIMUs), or similar, and/or any other suitable voltage or electric current sensors now known or later developed in the art.

Thus, the converter controller 262 is configured to receive one or more voltage and/or electric current feedback signals from the sensors 252, 254, 256, 258. More specifically, in certain embodiments, the current or voltage feedback signals may include at least one of line feedback signals, line-side converter feedback signals, rotor-side converter feedback signals, or stator feedback signals. For example, as shown in the illustrated embodiment, the converter controller 262 receives voltage and electric current measurement signals from the second set of voltage and electric current sensors 254 coupled in electronic data communication with stator bus 208. The converter controller 262 may also receive the third and fourth set of voltage and electric current measurement signals from the third and fourth set of voltage and electric current sensors 256, 258. In addition, the converter controller 262 may be configured with any of the features described herein in regards to the main controller 202. As such, the converter controller 262 is configured to implement the various method steps as described herein and may be configured similar to the turbine controller 202.

For conventional systems, during start-up of the power system, the grid filter is not connected to the grid (i.e. the line contactor is open). Therefore, once the DC link is charged, the line contactor is closed and the grid filter begins producing reactive power. Thus, a voltage spike can occur and travel through to the auxiliary power system, which generally includes an auxiliary transformer (not shown). As such, conventional systems can experience inrush of current upon start-up of the system. Accordingly, the present disclosure is directed to an improved system and method for minimizing inrush of current during start-up of an electrical power system connected to a power grid.

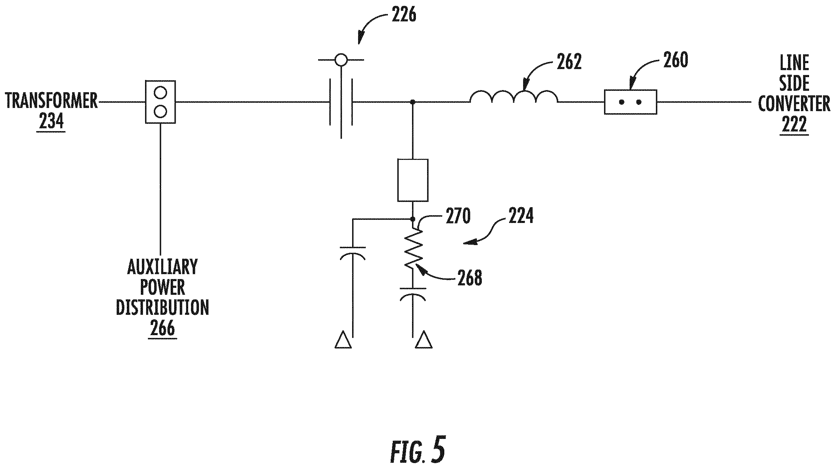

Referring now to FIG. 5, a partial, schematic diagram of one embodiment of the power system 200 between the line side converter 222 and the transformer 234 is illustrated according to the present disclosure. More specifically, as shown, the line filter 224 is coupled between the line side converter 222 and the transformer 234. Further, as shown, the line contactor 226 is coupled between the transformer 234 and the grid filter 224. Moreover, as shown, the power system 200 may further include a line shunt 260 and/or a line inductor 264 coupled between the grid filter 224 and the line side converter 222. In addition, the grid filter 224 may include at least one additional electrical component 268 coupled thereto for charging the AC capacitance in the grid filter 224. For example, as shown in the illustrated embodiment, the additional electrical component 268 may include one or more resistors 270. In further embodiments, the additional electrical component(s) 268 may include a contactor and/or any other suitable electrical components or combinations thereof that are capable of limiting electrical transients.

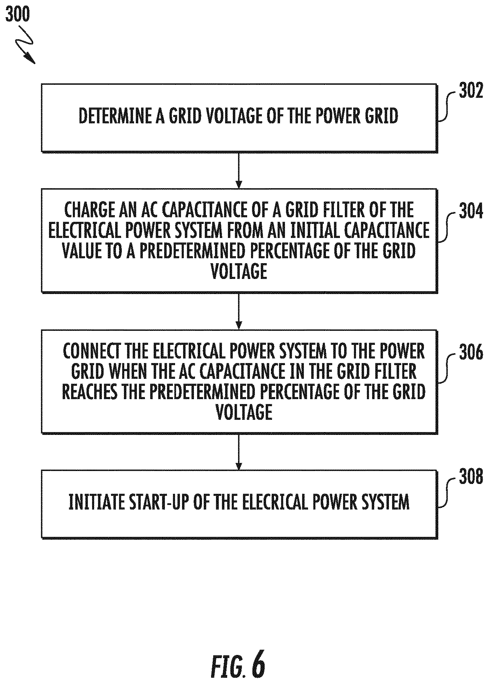

Referring particularly to FIG. 6, a flow diagram of one embodiment of a method 300 for minimizing inrush of current during start-up of an AC electrical power system connected to a power grid is illustrated. In general, the method 300 will be described herein with reference to the wind turbine 100 and power system 200 described above with reference to FIGS. 1 and 2. However, it should be appreciated by those of ordinary skill in the art that the disclosed method 300 may generally be utilized to control the operation of any other suitable power system (such as wind and/or solar power systems) having any suitable configuration, and/or systems having any other suitable system configuration. In addition, although FIG. 6 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at 302, the method 300 includes determining a grid voltage of the power grid 243. As shown at 304, the method 300 includes charging an AC capacitance of the grid filter 224 (also referred to herein as the line filter 224) from an initial capacitance value to a predetermined percentage of the grid voltage. In one embodiment, the predetermined percentage of the grid voltage may be 100% of the grid voltage. In alternative embodiments, the predetermined percentage of the grid voltage may include less than 100% of the grid voltage.

In particular embodiments, the method 300 may include charging the AC capacitance in the grid filter 224 with the additional electrical component(s) 268. In such embodiments, the method 300 may further include bypassing the additional electrical component(s) 268 after connecting the power system 200 to the power grid 243 but before initiating start-up. In alternative embodiment, the method 300 may include charging the AC capacitance in the grid filter 224 via the power converter 210, e.g. via the line side converter 222, operating in a first operating mode. In such embodiments, the line side converter 222 is configured to produce a voltage in sync with the grid voltage prior to connecting the power system 200 to the power grid 243.

In further embodiments, the method 300 may include charging the DC link 244 of the power converter 210 to a predetermined power level prior to charging the AC capacitance in the grid filter 224 via the line side converter 222. Alternatively, the method 300 may include supplying the DC link 244 with additional power prior to charging the capacitance in the grid filter 224. In several embodiments, the method 300 may also include transitioning from the first operating mode of the power converter 210 to a second operating mode after charging the AC capacitance of the grid filter 224 of the electrical power system 200. In such embodiments, the first operating mode may correspond to an AC charging mode, whereas the second operating mode may correspond to a standard operating mode. In such embodiments, the transitioning step may include detecting the contactor closure (e.g. from a change in shunt current) and subsequently stopping gating in the open-loop AC voltage mode and re-starting in standard operating mode and/or switching from one regulator topology to another.

Referring still to FIG. 6, as shown at 306, the method 300 includes connecting the wind turbine power system 200 to the power grid 243 when the AC capacitance in the grid filter 224 reaches the predetermined percentage of the grid voltage. As shown at 308, the method 300 includes initiating start-up of the wind turbine power system 200, i.e. after the AC capacitance in the grid filter 224 reaches the predetermined percentage of the grid voltage.

## Claims

1. A method (300) for minimizing inrush of current during start-up of an alternating current (AC) electrical power system (200) connected to a power grid (243), the method (300) **characterized by** :
determining a grid voltage of the power grid (243);
charging an AC capacitance of a grid filter (224) of the electrical power system (200) from an initial capacitance value to a predetermined percentage of the grid voltage;
connecting the electrical power system (200) to the power grid (243) when the AC capacitance in the grid filter (224) reaches the predetermined percentage of the grid voltage; and,
initiating start-up of the electrical power system (200).

2. The method (300) of claim 1, further comprising charging the AC capacitance in the grid filter (224) of the electrical power system (200) with at least one additional electrical component (268) coupled to the grid filter (224), the at least one additional electrical component (268) comprising at least one of one or more resistors (270) or a contactor.

3. The method (300) of claim 2, further comprising bypassing the at least one additional electrical component (268) after connecting the electrical power system (200) to the power grid (243) but before initiating start-up the electrical power system (200).

4. The method (300) of any of the preceding claims, further comprising charging the AC capacitance in the grid filter (224) of the electrical power system (200) via a power converter (210) of the electrical power system (200) operating in a first operating mode, the power converter (210) configured to produce a voltage in sync with the grid voltage prior to connecting the electrical power system (200) to the power grid (243).

5. The method (300) of claim 4, further comprising charging a DC link (244) of the power converter (210) to a predetermined power level prior to charging the AC capacitance in the grid filter (224) of the electrical power system (200) via the power converter (210).

6. The method (300) of claim 4, further comprising supplying a DC link (244) of the power converter (210) with additional power prior to charging the capacitance in the grid filter (224) of the electrical power system (200) via the power converter (210).

7. The method (300) of claim 4, further comprising transitioning from the first operating mode of the power converter (210) to a second operating mode after charging the AC capacitance of the grid filter (224) of the electrical power system (200), the first operating mode corresponding to an AC charging mode, the second operating mode corresponding to a standard operating mode.

8. The method (300) of any of the preceding claims, wherein the predetermined percentage of the grid voltage comprises up to about 100% of the grid voltage.

9. An alternating current (AC) electrical power system (200), comprising:
a generator (118) comprising a rotor (122) and a stator (120);
a power converter (210) comprising a line-side converter (222) coupled to a rotor-side converter (220) via a DC link (244), the rotor-side converter (220) coupled to the rotor;
a grid filter (224) coupled between the line-side converter (222) and a power grid (243);
a controller (202) configured to control the electrical power system (200), **characterized in that** the controller (202) is configured to perform the operations comprising:
determining a grid voltage of the power grid (243);
charging an AC capacitance of the grid filter (224) from an initial capacitance value to a predetermined percentage of the grid voltage;
connecting the electrical power system (200) to the power grid (243) when the AC capacitance in the grid filter (224) reaches the predetermined percentage of the grid voltage; and,
initiating start-up of the electrical power system (200).

10. The electrical power system (200) of claim 9, wherein the one or more operations further comprise:
charging the AC capacitance in the grid filter (224) with at least one additional electrical component (268) coupled to the grid filter (224), the at least one additional electrical component (268) comprising at least one of one or more resistors (270) or a contactor; and,
bypassing the at least one additional electrical component (268) after connecting the electrical power system (200) to the power grid (243) but before initiating start-up of the electrical power system (200).

11. The electrical power system (200) of claim 9, wherein the one or more operations further comprise charging the AC capacitance in the grid filter (224) via the line-side power converter (210) operating in a first operating mode, the line-side power converter (210) configured to produce a voltage in sync with the grid voltage prior to connecting the electrical power system (200) to the power grid (243).

12. The electrical power system (200) of claim 11, wherein the one or more operations further comprise charging the DC link (244) of the power converter (210) to a predetermined power level prior to charging the AC capacitance in the grid filter (224) of the electrical power system (200) via the line-side power converter (210).

13. The electrical power system (200) of claim 11, further comprising transitioning from the first operating mode of the line-side converter (222) to a second operating mode after charging the AC capacitance of the grid filter (224), the first operating mode corresponding to an AC charging mode, the second operating mode corresponding to a standard operating mode.

14. The electrical power system (200) of claim 13, wherein the one or more operations further comprise supplying the DC link (244) with additional power prior to charging the capacitance in the grid filter (224) of the electrical power system (200) via the line-side power converter (210).

15. The electrical power system (200) of claim 9, wherein the electrical power system (200) comprises at least one of a wind turbine power system or a solar power system, and wherein the generator comprises a doubly-fed induction generator (DFIG).

## Patentansprüche

1. Verfahren (300) zum Minimieren des Zustroms während des Startvorgangs eines Wechselstromsystems (AC-Stromsystems) (200), das mit einem Stromnetz (243) verbunden ist, wobei das Verfahren (300) **gekennzeichnet ist durch:**
Bestimmen einer Netzspannung des Stromnetzes (243);
Laden einer Wechselstromkapazität eines Netzfilters (224) des Stromsystems (200) von einem anfänglichen Kapazitätswert auf einen vorbestimmten Prozentsatz der Netzspannung;
Verbinden des Stromsystems (200) mit dem Stromnetz (243), wenn die Wechselstromkapazität in dem Netzfilter (224) den vorbestimmten Prozentsatz der Netzspannung erreicht; und
Initiieren des Startvorgangs des Stromsystems (200).

2. Verfahren (300) nach Anspruch 1, ferner umfassend das Laden der Wechselstromkapazität in dem Netzfilter (224) des Stromsystems (200) mit mindestens einer zusätzlichen elektrischen Komponente (268), die mit dem Netzfilter (224) gekoppelt ist, wobei die mindestens eine zusätzliche elektrische Komponente (268) mindestens einen von einem oder mehreren Widerständen (270) oder ein Schütz umfasst.

3. Verfahren (300) nach Anspruch 2, ferner umfassend das Umgehen der mindestens einen zusätzlichen elektrischen Komponente (268) nach dem Verbinden des Stromsystems (200) mit dem Stromnetz (243), aber vor dem Initiieren des Startvorgangs des Stromsystems (200).

4. Verfahren (300) nach einem der vorstehenden Ansprüche, ferner umfassend das Laden der Wechselstromkapazität in dem Netzfilter (224) des Stromsystems (200) über einen Stromwandler (210) des Stromsystems (200), der in einem ersten Betriebsmodus arbeitet, wobei der Stromwandler (210) zum Erzeugen einer Spannung synchron mit der Netzspannung vor dem Verbinden des Stromsystems (200) mit dem Stromnetz (243) konfiguriert ist.

5. Verfahren (300) nach Anspruch 4, ferner umfassend das Laden einer Gleichstromverbindung (244) des Stromwandlers (210) auf einen vorbestimmten Strompegel vor dem Laden der Wechselstromkapazität in dem Netzfilter (224) des Stromsystems (200) über den Stromwandler (210).

6. Verfahren (300) nach Anspruch 4, ferner umfassend das Versorgen einer Gleichstromverbindung (244) des Stromwandlers (210) mit zusätzlichem Strom vor dem Laden der Kapazität in dem Netzfilter (224) des Stromsystems (200) über den Stromwandler (210).

7. Verfahren (300) nach Anspruch 4, ferner umfassend das Übergehen von dem ersten Betriebsmodus des Stromwandlers (210) in einen zweiten Betriebsmodus nach dem Laden der Wechselstromkapazität des Netzfilters (224) des Stromsystems (200), wobei der erste Betriebsmodus einem AC-Lademodus entspricht, wobei der zweite Betriebsmodus einem Standardbetriebsmodus entspricht.

8. Verfahren (300) nach einem der vorstehenden Ansprüche, wobei der vorbestimmte Prozentsatz der Netzspannung bis zu etwa 100 % der Netzspannung umfasst.

9. Wechselstromsystem (AC-Stromsystem) (200), umfassend:
einen Generator (118), umfassend einen Rotor (122) und einen Stator (120);
einen Stromwandler (210), umfassend einen leitungsseitigen Wandler (222), der über eine Gleichstromverbindung (244) mit einem rotorseitigen Wandler (220) gekoppelt ist, wobei der rotorseitige Wandler (220) mit dem Rotor gekoppelt ist;
einen Netzfilter (224), der zwischen den leitungsseitigen Wandler (222) und ein Stromnetz (243) gekoppelt ist;
eine Steuerung (202), die zum Steuern des Stromsystems (200) konfiguriert ist, **dadurch gekennzeichnet, dass** die Steuerung (202) zum Durchführen der Operationen konfiguriert ist, umfassend:
Bestimmen einer Netzspannung des Stromnetzes (243);
Laden einer Wechselstromkapazität des Netzfilters (224) von einem anfänglichen Kapazitätswert auf einen vorbestimmten Prozentsatz der Netzspannung;
Verbinden des Stromsystems (200) mit dem Stromnetz (243), wenn die Wechselstromkapazität in dem Netzfilter (224) den vorbestimmten Prozentsatz der Netzspannung erreicht; und
Initiieren des Startvorgangs des Stromsystems (200).

10. Stromsystem (200) nach Anspruch 9, wobei der eine oder die mehreren Vorgänge ferner umfassen:
Laden der Wechselstromkapazität in dem Netzfilter (224) mit mindestens einer zusätzlichen elektrischen Komponente (268), die mit dem Netzfilter (224) gekoppelt ist, wobei die mindestens eine zusätzliche elektrische Komponente (268) mindestens einen von einem oder mehreren Widerständen (270) oder ein Schütz umfasst; und
Umgehen der mindestens einen zusätzlichen elektrischen Komponente (268) nach dem Verbinden des Stromsystems (200) mit dem Stromnetz (243), aber vor dem Initiieren des Startvorgangs des Stromsystems (200).

11. Stromsystem (200) nach Anspruch 9, wobei der eine oder die mehreren Vorgänge ferner das Laden der Wechselstromkapazität in dem Netzfilter (224) über den leitungsseitigen Stromwandler (210) umfasst, der in einem ersten Betriebsmodus arbeitet, wobei der leitungsseitige Stromwandler (210) zum Erzeugen einer Spannung synchron mit der Netzspannung vor dem Verbinden des Stromsystems (200) mit dem Stromnetz (243) konfiguriert ist.

12. Stromsystem (200) nach Anspruch 11, wobei der eine oder die mehreren Vorgänge ferner das Laden der Gleichstromverbindung (244) des Stromwandlers (210) auf einen vorbestimmten Strompegel vor dem Laden der Wechselstromkapazität in dem Netzfilter (224) des Stromsystems (200) über den leitungsseitigen Stromwandler (210) umfassen.

13. Stromsystem (200) nach Anspruch 11, ferner umfassend das Übergehen von dem ersten Betriebsmodus des leitungsseitigen Wandlers (222) in einen zweiten Betriebsmodus nach dem Laden der Wechselstromkapazität des Netzfilters (224), wobei der erste Betriebsmodus einem AC-Lademodus entspricht, wobei der zweite Betriebsmodus einem Standardbetriebsmodus entspricht.

14. Stromsystem (200) nach Anspruch 13, wobei der eine oder die mehreren Vorgänge ferner das Versorgen der Gleichstromverbindung (244) mit zusätzlichem Strom vor dem Laden der Kapazität in dem Netzfilter (224) des Stromsystems (200) über den leitungsseitigen Stromwandler (210) umfassen.

15. Stromsystem (200) nach Anspruch 9, wobei das Stromsystem (200) mindestens eines von einem Windturbinenstromsystem oder einem Solarstromsystem umfasst, und wobei der Generator einen doppelt gespeisten Induktionsgenerator (DFIG) umfasst.

## Revendications

1. Procédé (300) pour réduire au minimum un appel de courant pendant le lancement d'un système de puissance électrique à courant alternatif (CA) (200) connecté à un réseau de puissance (243), le procédé (300) **caractérisé par** :
la détermination d'une tension de réseau du réseau de puissance (243) ;
le chargement d'un condensateur CA d'un filtre de réseau (224) du système de puissance électrique (200) d'une valeur initiale de condensateur à un pourcentage prédéterminé de la tension de réseau ;
la connexion du système de puissance électrique (200) au réseau de puissance (243) lorsque le condensateur CA dans le filtre de réseau (224) atteint le pourcentage prédéterminé de la tension de réseau ; et,
le fait d'initier le lancement du système de puissance électrique (200).

2. Procédé (300) selon la revendication 1, comprenant en outre le chargement du condensateur CA dans le filtre de réseau (224) du système de puissance électrique (200) avec au moins un composant électrique supplémentaire (268) couplé au filtre de réseau (224), l'au moins un composant électrique supplémentaire (268) comprenant au moins l'un parmi une ou plusieurs résistances (270) ou un contacteur.

3. Procédé (300) selon la revendication 2, comprenant en outre la dérivation de l'au moins un composant électrique supplémentaire (268) après connexion du système de puissance électrique (200) au réseau de puissance (243) mais avant d'initier le lancement du système de puissance électrique (200).

4. Procédé (300) selon l'une quelconque des revendications précédentes, comprenant en outre le chargement du condensateur CA dans le filtre de réseau (224) du système de puissance électrique (200) par l'intermédiaire d'un convertisseur de puissance (210) du système de puissance électrique (200) fonctionnant dans un premier mode de fonctionnement, le convertisseur de puissance (210) configuré pour produire une tension en synchronisation avec la tension de réseau avant connexion du système de puissance électrique (200) au réseau de puissance (243).

5. Procédé (300) selon la revendication 4, comprenant en outre le chargement d'une liaison CC (244) du convertisseur de puissance (210) à un niveau de puissance prédéterminé avant chargement du condensateur CA dans le filtre de réseau (224) du système de puissance électrique (200) par l'intermédiaire du convertisseur de puissance (210).

6. Procédé (300) selon la revendication 4, comprenant en outre l'alimentation d'une liaison CC (244) du convertisseur de puissance (210) avec de la puissance supplémentaire avant chargement du condensateur dans le filtre de réseau (224) du système de puissance électrique (200) par l'intermédiaire du convertisseur de puissance (210).

7. Procédé (300) selon la revendication 4, comprenant en outre la transition du premier mode de fonctionnement du convertisseur de puissance (210) à un deuxième mode de fonctionnement après chargement du condensateur CA du filtre de réseau (224) du système de puissance électrique (200), le premier mode de fonctionnement correspondant à un mode de chargement CA, le deuxième mode de fonctionnement correspondant à un mode de fonctionnement standard.

8. Procédé (300) selon l'une quelconque des revendications précédentes, dans lequel le pourcentage prédéterminé de la tension de réseau comprend jusqu'à environ 100 % de la tension de réseau.

9. Système de puissance électrique à courant alternatif (CA) (200), comprenant :
un générateur (118) comprenant un rotor (122) et un stator (120) ;
un convertisseur de puissance (210) comprenant un convertisseur côté ligne (222) couplé à un convertisseur côté rotor (220) par l'intermédiaire d'une liaison CC (244), le convertisseur côté rotor (220) couplé au rotor ;
un filtre de réseau (224) couplé entre le convertisseur côté ligne (222) et un réseau de puissance (243) ;
un contrôleur (202) configuré pour commander le système de puissance électrique (200), **caractérisé en ce que** le contrôleur (202) est configuré pour mettre en oeuvre les opérations comprenant :
la détermination d'une tension de réseau du réseau de puissance (243) ;
le chargement d'un condensateur CA du filtre de réseau (224) d'une valeur initiale de condensateur à un pourcentage prédéterminé de la tension de réseau ;
la connexion du système de puissance électrique (200) au réseau de puissance (243) lorsque le condensateur CA dans le filtre de réseau (224) atteint le pourcentage prédéterminé de la tension de réseau ; et,
le fait d'initier le lancement du système de puissance électrique (200).

10. Système de puissance électrique (200) selon la revendication 9, dans lequel la ou les opérations comprennent en outre :
le chargement du condensateur CA dans le filtre de réseau (224) avec au moins un composant électrique supplémentaire (268) couplé au filtre de réseau (224), l'au moins un composant électrique supplémentaire (268) comprenant au moins l'un parmi une ou plusieurs résistances (270) ou un contacteur ; et,
la dérivation de l'au moins un composant électrique supplémentaire (268) après connexion du système de puissance électrique (200) au réseau de puissance (243) mais avant d'initier le lancement du système de puissance électrique (200).

11. Système de puissance électrique (200) selon la revendication 9, dans lequel la ou les opérations comprennent en outre le chargement du condensateur CA dans le filtre de réseau (224) par l'intermédiaire du convertisseur de puissance côté ligne (210) fonctionnant dans un premier mode de fonctionnement, le convertisseur de puissance côté ligne (210) configuré pour produire une tension en synchronisation avec la tension de réseau avant connexion du système de puissance électrique (200) au réseau de puissance (243).

12. Système de puissance électrique (200) selon la revendication 11, dans lequel la ou les opérations comprennent en outre le chargement de la liaison CC (244) du convertisseur de puissance (210) à un niveau de puissance prédéterminé avant chargement du condensateur CA dans le filtre de réseau (224) du système de puissance électrique (200) par l'intermédiaire du convertisseur de puissance côté ligne (210).

13. Système de puissance électrique (200) selon la revendication 11, comprenant en outre la transition du premier mode de fonctionnement du convertisseur côté ligne (222) à un deuxième mode de fonctionnement après chargement du condensateur CA du filtre de réseau (224), le premier mode de fonctionnement correspondant à un mode de chargement CA, le deuxième mode de fonctionnement correspondant à un mode de fonctionnement standard.

14. Système de puissance électrique (200) selon la revendication 13, dans lequel la ou les opérations comprennent en outre l'alimentation de la liaison CC (244) avec de la puissance supplémentaire avant chargement du condensateur dans le filtre de réseau (224) du système de puissance électrique (200) par l'intermédiaire du convertisseur de puissance côté ligne (210).

15. Système de puissance électrique (200) selon la revendication 9, dans lequel le système de puissance électrique (200) comprend au moins l'un parmi un système de puissance de turbine éolienne ou un système de puissance solaire, et dans lequel le générateur comprend un générateur asynchrone à alimentation double (DFIG).
